(19) Europäisches Patentamt
European Patent Office
Office européen des brevets

(11) **EP 2 457 947 B1**

(12) **EUROPEAN PATENT SPECIFICATION**

(45) Date of publication and mention
of the grant of the patent:
**15.10.2014 Bulletin 2014/42**

(51) Int Cl.:
*C08L 7/00* (2006.01)   *C08L 9/00* (2006.01)
*C08L 9/06* (2006.01)   *C08K 3/36* (2006.01)
*C08K 5/54* (2006.01)   *B60C 1/00* (2006.01)

(21) Application number: **10802285.6**

(22) Date of filing: **21.07.2010**

(86) International application number:
**PCT/JP2010/062249**

(87) International publication number:
**WO 2011/010665 (27.01.2011 Gazette 2011/04)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **22.07.2009   JP 2009171492**

(43) Date of publication of application:
**30.05.2012 Bulletin 2012/22**

(73) Proprietor: **Bridgestone Corporation
Tokyo 104-8340 (JP)**

(72) Inventors:
• **MATSUO Shigeaki
Kodaira-shi
Tokyo 187-8531 (JP)**
• **HOSHINO Yuta
Kodaira-shi
Tokyo 187-8531 (JP)**

(74) Representative: **Oxley, Robin John George et al
Marks & Clerk LLP
90 Long Acre
London WC2E 9RA (GB)**

(56) References cited:
**WO-A1-2005/087858     WO-A1-2009/091057
WO-A1-2009/133936     JP-A- 2007 138 069
JP-A- 2008 127 524     JP-A- 2008 143 943
JP-T- 2005 500 420     US-A- 5 846 506
US-A1- 2006 128 854**

Remarks:
The file contains technical information submitted after
the application was filed and not included in this
specification

**Description**

Technical Field

The present invention relates to a low heat build-up tire, more specifically to a tire prepared by using a rubber composition which is prepared by using a low molecular synthetic rubber as a rubber component and precipitated silica having a specific structure as a reinforcing filler and which is excellent in low heat build-up, abrasion resistance and processability.

Background Art

In recent years, requirements for low fuel consumption are becoming severer in connection with the movement of global emission control of carbon dioxide which follows social requirement for energy saving and a rise in concern about environmental problems. In order to meet the above requirements, tires which are reduced in rolling resistance and have low build-up as tire performances have come to be demanded. In respect to a method for reducing rolling resistance of a tire, it is carried out as the most usual method to use a material having lower heat build-up as a rubber composition.

Many techniques such as addition of loss tangent reducing agents, improvement in dispersibility of carbon black added as a filler for reinforcement by modification of polymers and use of silica for a filler have so far been studied as techniques for reducing heat generation of rubbers.

Carbon blacks can provide rubber compositions with high abrasion resistance and therefore have so far been used as a reinforcing filler in many cases. When low heat build-up is intended to be achieved by using carbon black alone, a compounding amount of carbon black is reduced or carbon black having a large particle diameter is used, and it is known that in both cases, the reinforcing property, the abrasion resistance and the grip on a wet road can not be prevented from being reduced. On the other hand, it is known to use silica as a filler in order to enhance the low heat build-up (for example, patent documents 1 to 4). However, particles of silica tend to be aggregated by virtue of a hydrogen bond of a silanol group which is a surface functional group of silica, and a silanol group is not good in wettability with a rubber molecule due to a -OH group having hydrophilicity, so that dispersion of silica into rubber is inferior. The kneading time has to be extended in order to improve the above problem. Also, a Mooney viscosity of a rubber composition is elevated due to insufficient dispersion of silica into rubber, and the defect that the rubber composition is inferior in processability such as extrusion has been involved therein. Further, since a surface of a silica particle is acidic, silica adsorbs a basic substance used as a vulcanization accelerator in vulcanizing a rubber composition to prevent the rubber composition from being sufficiently vulcanized, and the defect that the elastic modulus is not enhanced has been involved therein as well.

A silane coupling agent has been developed in order to improve the above defects, but dispersion of silica has not yet reached a sufficiently high level, and it has been particularly difficult to obtain industrially good dispersion of silica particles. Accordingly, it is tried to mix silica whose surface is treated with a hydrophobicity-providing agent to accelerate the reaction of a silane coupling agent (patent document 1).

Further, it is disclosed in a patent document 5 to use hydrophobic precipitated silica. However, since precipitated silica subjected to complete hydrophobicity treatment is used, surface silanol groups to react with a silane coupling agent disappear, and therefore the defect that rubber is not sufficiently reinforced has been involved therein. Further, silica having an increased particle diameter is used in order to improve the low heat build-up, but silica is reduced in a specific surface area by increasing a particle diameter to deteriorate a reinforcing property thereof. It is disclosed in a patent document 6 to use silica having a specific form, but low heat build-up and abrasion resistance of the rubber composition are not sufficiently high.

On the other hand, many modified rubbers interacting with fillers such as carbon black and silica have been developed as methods for improving rubber components (patent document 7), but a satisfactory modifying effect is not necessarily obtained in rubber compositions compounded with silica and carbon black. Further, liquid styrene-butadiene rubbers having a low molecular weight are used in order to enhance the abrasion resistance (patent documents 8 and 9).

Prior Art Documents

Patent Documents

Patent document 1: Japanese Patent Application Laid-Open Hei 6 No. 248116
Patent document 2: Japanese Patent Application Laid-Open Hei 7 No. 70369

Patent document 3: Japanese Patent Application Laid-Open Hei 8 No. 245838
Patent document 4: Japanese Patent Application Laid-Open Hei 3 No. 252431
Patent document 5: Japanese Patent Application Laid-Open Hei 6 No. 157825
Patent document 6: Japanese Patent Application Laid-Open No. 2006-37046
Patent document 7: Japanese Examined Patent Application Publication Hei 6 No. 57767
Patent document 8: Japanese Patent Application Laid-Open Hei 1 No. 197541
Patent document 9: Japanese Patent Application Laid-Open No. 2005-298804

Reference is also made to the following:

JP 2005500420, JP 2008127524, WO 2005/087858, JP 2008143943, JP 2007138069.

OUTLINE OF THE INVENTION

Problems to be Solved by the Invention

The present inventors have found that a rubber composition is provided with low heat build-up and is improved in processability even when a polymer having a low molecular weight as a rubber component and precipitated silica having a specific structure as silica are used alone respectively, but abrasion resistance of the rubber composition is improved by using the both at the same time. Thus, the present invention has come to be completed. An object of the present invention is to provide a tire which is prepared by using the above rubber composition for a member and which has low rolling resistance and is excellent in low heat build-up and abrasion resistance.

Means for Solving the Problems

The present invention provides a pneumatic tire according to claim 1.
The rubber composition used for the tire of the present invention is a rubber composition prepared by compounding and mixing a natural rubber and/or diene base synthetic rubber (A) with an aromatic vinyl compound-diene compound copolymer having a low molecular weight (B), structural precipitated silica, a silane coupling agent having a specific structure and carbon black.
The aromatic vinyl compound-diene compound copolymer having a low molecular weight (B) used in the present invention is a copolymer which has a weight average molecular weight of 4,000 to 250,000 and comprises 0 to 80 % by mass of an aromatic vinyl compound and which has a vinyl bond content of 0 to 80 % by mass in a part of a diene compound. Further, when an aromatic vinyl compound-diene compound copolymer having a large molecular weight is used as the rubber component (A), a difference between the contents of the aromatic vinyl compounds in the rubber component (A) and the copolymer (B) is controlled to 30 % by mass or less, whereby compatibility of the rubber component (A) with the copolymer (B) can be enhanced.
On the other hand, the precipitated silica used in the present invention is characterized by having a structure (primary aggregation) which can be represented by the following index.
That is, a cetyltrimethylammonium bromide-adsorbing specific surface area (CTAB) ($m^2$/g) and the mode $A_{ac}$ in diameters (nm) of primary aggregates determined by acoustic measurement of particle size distribution satisfy equation (I) shown below:

$$A_{ac} \geq -0.76 \times (CTAB) + 274 \qquad (I)$$

and an ignition loss (mass reduction % when heated at 750°C for 3 hours) and a heating loss (mass reduction % when heated at 105°C for 2 hours) satisfy preferably equation (II) shown below:

$$(\text{ignition loss}) - (\text{heating loss}) \leq 3 \qquad (II)$$

A rubber composition containing the above precipitated silica can allow low heat build-up to be compatible with abrasion resistance and is excellent as well in processability.
The precipitated silica used in the present invention is obtained by a method in which precipitated silica is deposited and precipitated by neutralizing an aqueous solution of an alkali salt of silicic acid such as sodium silicate with a mineral acid such as sulfuric acid, that is, a method according to a production method of so-called precipitation process hydrated silica.

Effects of the Invention

According to the present invention, a rubber composition excellent in low heat build-up and processability is obtained, and when it is used for a tire member, the tires are excellent in both of low heat build-up and abrasion resistance which have so far been an antinomic matter, so that they have low fuel consumption and can contribute to energy saving to a large extent.

Mode for Carrying Out the Invention

The rubber composition used for the tire of the present invention is a rubber composition prepared by compouding and mixing 100 parts by mass of natural rubber and/or diene base synthetic rubber (A) with 5 to 60 parts by mass of aromatic vinyl compound-diene compound copolymer having a low molecular weight (B), structural precipitated silica, a silane coupling agent having a specific structure and carbon black.

The rubber component (A) comprises at least one rubber of a natural rubber and a synthetic diene base rubber. Various rubbers can be applied, and rubbers prepared by emulsion polymerization or solution polymerization are preferred.

Capable of being shown as the examples of the synthetic diene base rubber are cis-1,4-polyisoprene, styrene-butadiene copolymers (SBR), low cis-1,4-polybutadiene, high cis-1,4-polybutadiene, ethylene-propylene-diene copolymers, chloroprene rubbers, halogenated butyl rubbers, acrylonitrile-butadiene rubbers and the like, and the natural rubber and the synthetic diene base rubber can be used not only alone but also in a mixture.

The preferred rubber component (A) is natural rubber, cis-1,4-polyisoprene, SBR and polybutadiene. If 10 parts by mass or more of SBR or polybutadiene is contained in the rubber component (A), an improving effect brought about by combination with the prescribed copolymer (B) is definite and that is preferred.

The rubber component (A) contains preferably 30 parts by mass or more of a styrene-butadiene copolymer or polybutadiene having a weight average molecular weight of 300,000 to 1,500,000. The styrene-butadiene copolymer or polybutadiene comprises preferably 0 to 60 % by mass of styrene and has preferably a vinyl bond content of 0 to 80 % by mass in the parts of the diene compound. To be more specific, the styrene-butadiene copolymer or polybutadiene is an emulsion-polymerized or solution-polymerized styrene-butadiene copolymer comprising 0 % by mass or more of styrene or polybutadiene. Further, a difference between the contents of the aromatic vinyl compounds in the styrene-butadiene copolymer and the copolymer (B) is preferably 30 % by mass or less. If a difference between the contents of the aromatic vinyl compounds exceeds 30 % by mass, the compatibility is liable to be reduced, and no sufficiently high breaking strength is likely to be obtained.

The aromatic vinyl compound-diene compound copolymer (B) having a low molecular weight is a compound obtained by copolymerizing an aromatic vinyl compound and a diene compound which are monomers. It has a weight average molecular weight of 4,000 to 250,000 (measured by gel permeation chromatography in terms of polystyrene). The copolymer (B) comprises 0 to 80 % by mass of the aromatic vinyl compound and has a vinyl bond content of 0 to 80 % by mass in the parts of the diene compound. If both exceed 80 % by mass, the processability is reduced. The copolymer (B) is preferably the aromatic vinyl compound-diene compound copolymer which comprises 0 to 60 % by mass of the aromatic vinyl compound and which has a vinyl bond content of 0 to 80 % by mass in the parts of the diene compound, more preferably the aromatic vinyl compound-diene compound copolymer which comprises 0 to 50 % by mass of the aromatic vinyl compound and which has a vinyl bond content of 0 to 70 % by mass in the parts of the diene compound.

The copolymer (B) has a weight average molecular weight of preferably 10,000 to 200,000, more preferably 30,000 to 150,000 and further preferably 50,000 to 150,000. If the weight average molecular weight is 200,000 or more, the workability is reduced. Also, a narrower molecular weight distribution thereof is preferred, and Mw/Mn is preferably 5.0 or less. If it is broadened, the copolymer (B) tends to be inferior in tan $\delta$ which is an index of the low heat build-up.

The copolymer comprising more than 80 % by mass of the aromatic vinyl compound and the diene compound having a vinyl bond content of exceeding 80 % by mass is unsatisfactorily improved in all of workability, low heat build-up and abrasion resistance. The vinyl bond content prescribed above shows a content of vinyl bonds contained in structural units originating in the diene compound, and it shows a ratio of a vinyl bond content based on a content of all bonds including other bonds represented by a cis bond and a trans bond.

The aromatic vinyl compound includes styrene, p-methylstyrene, m-methylstyrene, p-tert-butylstyrene, $\alpha$-methylstyrene, chloromethylstyrene, vinyltoluene and the like. It includes preferably styrene, p-methylstyrene and $\alpha$-methylstyrene. It is particularly preferably styrene.

Butadiene, isoprene, pentadiene, 2,3-dimethylbutadiene and the like are used as the diene compound, and butadiene is particularly preferred.

The copolymer (B) can be obtained by various production methods as long as a prescribed molecular structure is obtained. Various liquid, or low molecular weight polymers or rubbers can be applied as the copolymer (B), and preferably, it can suitably be produced by subjecting styrene and butadiene to solution polymerization. The copolymer (B) is particularly preferably a solution-polymerized styrene-butadiene copolymer rubber.

An example of the industrial method is a method in which the prescribed monomers are copolymerized in a hydrocarbon solvent using an organic lithium compound as an initiator. The copolymer (B) can be obtained, for example, by copolymerizing the diene compound such as 1,3-butadiene with the aromatic vinyl compound in a hydrocarbon solvent using an organic lithium compound as an initiator under the presence of ether or tertiary amine in a vessel type or tower type reactor. However, the production method shall not be restricted to the above method.

In the rubber composition used in the present invention, the aromatic vinyl compound-diene compound copolymer having a low molecular weight (B) is added in an amount of 5 to 60 parts by mass based on 100 parts by mass of the rubber component (A). If it is less than 5 parts by mass, the effects thereof are not exerted, and if it exceeds 60 parts by mass, the breaking characteristic is reduced.

Next, the structural precipitated silica used in the present invention can be confirmed by that characteristic values thereof measured by a method usually used for measuring silica, carbon black and the like satisfy the following relations.

That is, it is precipitated silica in which a cetyltrimethylammonium bromide-adsorbing specific surface area (CTAB) ($m^2$/g) and a diameter $A_{ac}$ (nm) of the mode in the number of a primary aggregates determined by an acoustic measurement of particle size distribution satisfy equation (I) shown below:

$$A_{ac} \geqq -0.76 \times (CTAB) + 274 \quad (I)$$

and in which an ignition loss (mass reduction % when heated at 750°C for 3 hours) and a heating loss (mass reduction % when heated at 105°C for 2 hours) satisfy equation (II) shown below:

$$(ignition\ loss) - (heating\ loss) \leqq 3 \quad (II)$$

The cetyltrimethylammonium bromide-adsorbing specific surface area (CTAB) is a specific surface area ($m^2$/g) of precipitated silica calculated from an adsorbing amount of cetyltrimethylammonium bromide onto a surface of precipitated silica.

CTAB is measured according to a method described in ASTM D3765-92. The method described in ASTM D3765-92 is a method for measuring CTAB of carbon black, and therefore it shall be slightly modified. That is, a standard product of carbon black is not used, and a cetyltrimethylammonium bromide (hereinafter abbreviated as CE-TRAB) standard solution is prepared. This is used to standardize a precipitated silica OT (sodium di-2-ethylhexylsulfosuccinate) solution to calculate the specific surface area from an adsorbing amount of CE-TRAB assuming that an adsorbing cross-sectional area per one molecule of CE-TRAB onto a surface of precipitated silica is 0.35 $nm^2$.

The precipitated silica used in the present invention has CTAB of 50 to 250 $m^2$/g, preferably 100 to 200 $m^2$/g. If CTAB is less than 50 $m^2$/g, the rubber composition is likely to be notably reduced in a storage elastic modulus, and if it is larger than 250 $m^2$/g, the unvulcanized rubber composition is likely to be risen in a viscosity.

A diameter measured as a particle diameter of precipitated silica by means of an acoustic measuring equipment of particle size distribution (particle size distribution diameter by acoustic measurement) is an index for development of a structural property. The particles of precipitated silica contain as well the particles prepared by primary aggregation of particles having a fine particle diameter and particles prepared by slight secondary aggregation of the above particles.

Measurement by the acoustic measuring equipment of particle size distribution is carried out after subjecting a 0.01M KCl aqueous solution of precipitated silica to dispersion treatment by a ultrasonic wave for 5 minutes to remove bubbles and break secondary aggregates. Particle diameters of primary aggregates of precipitated silica and distribution of particle numbers thereof are obtained, and assuming that among them, a diameter of the particles observed in the highest frequency is set to $A_{ac}$ (nm), the following equation:

$$A_{ac} \geqq -0.76 \times (CTAB) + 274 \quad (I)$$

is satisfied, the rubber composition is improved in both of low heating property and abrasion resistance. When $A_{ac}$ does not satisfy the above condition, the rubber composition is reduced in either or both of low heat build-up and abrasion resistance. Further, $A_{ac}$ is 1 $\mu$m or less. If it is larger than 1 $\mu$m, precipitated silica is likely to become a breaking nucleus to damage the kinetic properties of the rubber composition.

Further, a difference between a reduction (%) in a mass of precipitated silica used in the present invention when heating it and a reduction (%) in a mass thereof when igniting it is:

$$(\text{ignition loss}) - (\text{heating loss}) \leqq 3 \quad (\text{II})$$

The heating loss and the ignition loss are measured according to a test method of a compounding ingredient for rubber in JIS K6220-1, wherein the heating loss is a reduction (%) in the mass when heated usually at 105 $\pm$ 2°C for 2 hours, and the ignition loss is a reduction (%) in the mass when ignited usually at 750 $\pm$ 25°C for 3 hours.

A use amount of precipitated silica used in the present invention is 10 to 150 parts by mass based on 100 parts by mass of the rubber component (A). If it is less than 10 parts by mass, the reinforcing is not satisfactory, and if it exceeds 150 parts by mass, the processability is deteriorated.

Precipitated silica used in the present invention is produced according to a production process for precipitation process precipitated silica. For example, sodium silicate and sulfuric acid are added to a reaction vessel filled in advance with a fixed amount of warm water in a fixed time while controlling pH and temperature to obtain a precipitated silica slurry.

Subsequently, the above precipitated silica slurry is separated by filtrating through a filtering device capable of washing a cake, such as a filter press and washed to remove by-produced electrolytes, and then a slurry is prepared from a precipitated silica cake obtained and dried by means of a dryer such as a spray dryer to thereby produce precipitated silica.

A silane coupling agent is preferably used in the present invention. The silane coupling agent is reacted with silanol groups remaining on a surface of the precipitated silica and the rubber component polymer to act as a bonding bridge between the precipitated silica and the rubber and to form a reinforcing phase.

The silane coupling agent used in the present invention is preferably at least one selected from the group consisting of compounds represented by formulas shown below:

$$A_m B_{3-m} Si-(CH_2)_a-S_b-(CH_2)_a-SiA_m B_{3-m} \quad (\text{III})$$

(wherein A is $C_n H_{2n+1} O$ (n is an integer of 1 to 3) or a chlorine atom; B is an alkyl group having 1 to 3 carbon atoms; m is an integer of 1 to 3; a is an integer of 1 to 9; b is an integer of 1 or more and may have distribution; provided that when m is 1, two B may be same or different and that when m is 2 or 3, two or three A may be same or different);

$$A_m B_{3-m} Si-(CH_2)_c-Y \quad (\text{IV})$$

(wherein A is $C_n H_{2n+1} O$ (n is an integer of 1 to 3) or a chlorine atom; B is an alkyl group having 1 to 3 carbon atoms; Y is a mercapto group, a vinyl group, an amino group, a glycidoxy group or an epoxy group; m is an integer of 1 to 3; c is an integer of 0 to 9; provided that when m is 1, two B may be same or different and that when m is 2 or 3, two or three A may be same or different); and

$$A_m B_{3-m} Si-(CH_2)_a-S_b-Z \quad (\text{V})$$

(wherein A is $C_n H_{2n+1} O$ (n is an integer of 1 to 3) or a chlorine atom; B is an alkyl group having 1 to 3 carbon atoms; Z is a benzothiazolyl group, an N,N-dimethylthiocarbamoyl group or a methacryloyl group; m is an integer of 1 to 3; a is an integer of 1 to 9; b is an integer of 1 or more and may have distribution; provided that when m is 1, two B may be same or different and that when m is 2 or 3, two or three A may be same or different).

To be specific, the silane coupling agent represented by Formula (III) includes bis-(3-triethoxysilylpropyl) tetrasulfide, bis-(3-trimethoxysilylpropyl) tetrasulfide, bis-(3-methyldimethoxysilylpropyl) tetrasulfide, bis-(3-triethoxysilylethyl) tetrasulfide, bis-(3-triethoxysilylpropyl) disulfide, bis-(3-trimethoxysilylpropyl) disulfide and bis-(3-triethoxysilylpropyl) trisulfide;

the silane coupling agent represented by Formula (IV) includes 3-mercaptopropyltrimethoxysilane, 3-mercaptopropyltriethoxysilane, 3-mercaptopropylmethyldimethoxysilane, vinyltrimethoxysilane, vinyltriethoxysilane, 3-aminopropyltrimethoxysilane, 3-aminopropyltriethoxysilane, γ-glycidoxypropyltrimethoxysilane and γ-glycidoxypropylmethyldiethoxysilane; and

the silane coupling agent represented by Formula (V) includes 3-trimethoxysilylpropyl-N,N-dimethylthiocarbamoyl tetrasulfide, 3-trimethoxysilylpropylbenzothiazolyl tetrasulfide and 3-trimethoxysilylpropylmethacryloyl monosulfide.

A use amount of the silane coupling agent is preferably 1 to 20 % by mass based on an amount of precipitated silica. If the use amount is less than 1 % by mass, the sufficiently high coupling effect is not obtained in a certain case, and if it exceeds 20 % by mass, gelation of the polymer is brought about in a certain case.

In the rubber composition of the present invention, carbon black can be used as a reinforcing filler together with the precipitated silica. Abrasion resistance of the rubber composition can be improved by compounding carbon black. Capable of being used as the carbon black are, for example, carbon blacks of various grades such as SAF, HAF, ISAF, HAF, FEF and GPF.

A use amount of the carbon black is preferably 80 parts by mass or less based on 100 parts by mass of rubber component (A), and a total compounding amount obtained by summing the carbon black and the precipitated silica is preferably 120 parts by mass or less. Controlling the total compounding amount to 120 parts by mass or less based on 100 parts by mass of the rubber component makes it possible to improve sufficiently the low heat build-up and the abrasion resistance.

The rubber composition of the present invention can suitably be compounded, if necessary, with various chemicals usually used in the rubber industry, for example, other reinforcing fillers, vulcanizing agents, vulcanization accelerators, softening agents, antioxidants, scorch inhibitors, zinc oxide, stearic acid and the like as long as the object of the present invention is not be damaged.

A process oil, for example, at least one of process oils of a paraffin base, a naphthene base, an aromatic base and the like can be used as the softening agent. Aromatic base process oils are preferably used for applications in which great emphasis is placed on the breaking characteristic and the abrasion resistance, and the naphthene base or paraffin base process oils are preferably used for applications in which great emphasis is placed on the low heat build-up and the low temperature characteristic.

The vulcanizing agent includes, for example, sulfur and the like, and a use amount thereof is preferably 0.1 to 10 parts by mass, preferably 0.5 to 8.0 parts by mass in terms of a sulfur content based on 100 parts by mass of rubber component (A). If it is less than 0.1 part by mass, the vulcanized rubber is reduced in a breaking characteristic and abrasion resistance, and if it exceeds 10 parts by mass, the rubber elasticity tends to be lost.

The rubber composition of the present invention is obtained by kneading the components by means of an open type mixer such as a roll mill and an internal mixer such as a Banbury mixer, and it is vulcanized after subjected to molding processing and can be used as well for applications of industrial products such as rubber cushions, belts, hoses and others. In particular, it is suitably used as rubber for tires and can be applied to, for example, various kinds of tire members such as tread rubber (including cap rubber and base rubber), side rubber, side-reinforcing rubber and inner liner rubber.

The tire of the present invention is characterized by applying the rubber composition described above to members. The tires prepared by using the rubber composition for a tread member are excellent in abrasion resistance and have low rolling resistance since the rubber composition has low heat build-up. Ordinary air or air in which an oxygen partial pressure is changed or inert gas such as nitrogen can be used for gas charged into the tire of the present invention.

EXAMPLES

The present invention shall be explained below in further details with reference to examples and comparative examples, but the present invention shall by no means be restricted to the following examples.

In the following examples and comparative examples, various property items were measured and evaluated according to the following methods.

1. Physical properties of aromatic vinyl compound-diene compound copolymer (B) having a low molecular weight:

(1) Measurement of weight average molecular weight (Mw)

Determined in terms of polystyrene by means of gel permeation chromatography (GPC) (HLC-8220GPC, manufactured by Tosoh Corp.).

(2) Styrene content (% by mass in the polymer)

Determined by 270 MHz $^1$H-NMR.

(3) Vinyl content (% by mass based on the whole part of the diene compound part)

Determined by 270 MHz $^1$H-NMR.

2. Physical properties of precipitated silica:

(1) Acoustic measurement of particle size distribution diameter:

A 0.01M KCl aqueous solution of each precipitated silica was subjected to dispersion treatment for 5 minutes by a ultrasonic wave to remove bubbles, and then the mode $A_{ac}$ (nm) in diameters of primary aggregates of the precipitated silica was measured by means of a supersonic measuring equipment of particle size distribution DT1200 (manufactured by Dispersion Technology, Inc.).

(2) Measurement of CTAB:

CTAB was measured according to a method described in ASTM D3765-92. The method described in ASTM D3765-92 is a method for measuring CTAB of carbon black, and therefore it was slightly modified. That is, IRB #3 (83.0 $m^2$/g) which was a standard product of carbon black was not used, and a cetyltrimethylammonium bromide (hereinafter abbreviated as CE-TRAB) standard solution was prepared separately. This was used to standardize a precipitated silica OT (sodium di-2-ethylhexylsulfosuccinate) solution to calculate a specific surface area ($m^2$/g) from an adsorbing amount of CE-TRAB assuming that an adsorbing cross-sectional area per one molecule of CE-TRAB onto a surface of precipitated silica was 0.35 $nm^2$. This is because it is considered that carbon black and precipitated silica are different in a surface, so that they are different in an adsorbing amount of CE-TRAB even if they have the same surface area.

(3) Measurement of heating loss and ignition loss:

A sample of precipitated silica was weighed and heated at 105 $\pm$ 2°C for 2 hours in a case of the heating loss and at 750 $\pm$ 25°C for 3 hours in a case of the ignition loss, and then the masses thereof were measured to represent a difference from a mass of the sample before heated by % based on a mass thereof before heated.

3. Processability:

The Mooney viscosity ($ML_{1+4}$, 130°C) was measured under the conditions of preliminary heating for 1 minute, a rotor working time of 4 minutes and a temperature of 130°C using a L rotor according to JIS K6300-1994, and it was shown by an index, wherein that of Comparative Example 1 was set to 100. It is shown that the larger the numerical value is, the worse the processability is.

4. Rolling resistance (low heat build-up):

The values of tan $\delta$ (dynamic loss) were measured at a temperature of 60°C, a distortion of 1 % and a frequency of 50 Hz by means of a viscoelasticity spectrometer (manufactured by Toyo Seiki Seisakusho Ltd.). They were shown by an index in terms of (tan $\delta$ in Comparative Example 1/tan $\delta$ in Examples) $\times$ 100. The smaller the numerical value is, the better the low heat build-up is.

5. Abrasion resistance:

The abrasion amount in a slipping rate of 60 % at room temperature was measured by means of a Lambourn abrasion tester according to JIS K6264, and an inverse number of the abrasion amount was shown by an index, wherein the value in Comparative Example 1 was set to 100. The larger the numerical value is, the better the abrasion resistance is.

6. Durability:

The breaking strength (TB) was measured according to JIS K6301-1995. It was shown by an index and evaluated, wherein that of Comparative Example 1 was set to 100. The larger the index is, the better the durability is.

Production Example 1 (production of aromatic vinyl compound-diene compound copolymer having a low molecular weight)

A liquid aromatic vinyl compound-diene compound copolymer (B-1) having a weight average molecular weight of 80,000 can be produced in the following process.

A glass pressure vessel of 800 mL which was dried and substituted with nitrogen was charged with a cyclohexane solution of butadiene (16 %) and a cyclohexane solution of styrene (21 %) so that 37.5 g of a butadiene monomer and 12.5 g of a styrene monomer were contained therein and further charged with 0.66 millimole of 2,2-ditetrahydrofurylpropane, and 1.32 millimole of n-butyllithium (BuLi) was added thereto. Then, polymerization was carried out for 1.5 hour in a warm water bath of 50°C. The polymerization conversion rate was almost 100 %.

Then, 0.5 mL of 5 weight % solution of 2,6-di-t-butyl-p-cresol (BHT) in isopropanol was further added to the polymerization system to terminate the reaction. Then, the product was dried up by a conventional method to thereby obtain a polymer.

The copolymer thus obtained had a weight average molecular weight of 80,000 and comprised 25 % by mass of styrene, and a vinyl bond content in a part of butadiene was 65 % by mass.

Prepared in the same manner were aromatic vinyl compound-diene compound copolymers B-2 to B-10 which had weight average molecular weights of 4,000, 9,000, 12,000, 25,000, 40.000, 60,000, 120,000, 180,000 and 220,000 and comprised 25 % by mass of styrene and in which a vinyl bond content in a part of butadiene was 65 % by mass.

Production of precipitated silica:

Production Example A

A jacket-installed stainless-made reaction bath having a volume of 180 L which was equipped with a stirrer was charged with 93 L of water and 0.6 L of a sodium silicate aqueous solution ($SiO_2$ 160 g/L, $SiO_2/Na_2O$ mole ratio: 3.3) and heated up to 96°C. A concentration of $Na_2O$ in the resulting solution was 0.005 mol/L.

While maintaining the above solution at a temperature of 96°C, dropwise added at the same time were the same sodium silicate aqueous solution as described above at a flow rate of 540 ml/minute and sulfuric acid (18 mol/L) at a flow rate of 24 ml/minute. A $Na_2O$ concentration in the reaction solution was maintained in a range of 0.00 to 0.01 mol/L with controlling the flow rates to carry out neutralization reaction. The solution started becoming clouded in the middle of the reaction and was increased in a viscosity in 47 minutes, and the solution was gelatinized. Addition was further continued, and the reaction was terminated in 90 minutes.

After terminating the reaction, a temperature of the reaction liquid was maintained at 96°C for 30 minutes. A concentration of silica in the resulting solution was 55 g/L. Subsequently, sulfuric acid having the concentration described above was added until a pH of the solution was 3 to obtain a silica slurry. The silica slurry thus obtained was filtrated by means of a filter press, and the filtrated solid was washed with water to obtain a wet cake. Then, the wet cake was turned into a slurry by means of an emulsifying equipment, and the slurry was dried by means of a spray dryer to obtain wet process precipitated silica A.

Production Example B

The same vessel as used in Production Example A was charged with 93 L of water and 0.6 L of the sodium silicate aqueous solution which were the same raw materials as used in Production Example A, and the mixture was heated up to 90°C. A concentration of $Na_2O$ in the resulting solution was 0.005 mol/L.

While maintaining the above solution at a temperature of 90°C, dropwise added at the same time were the same sodium silicate aqueous solution as described above at a flow rate of 540 ml/minute and sulfuric acid (18 mol/L) at a flow rate of 24 ml/minute. A $Na_2O$ concentration in the reaction solution was maintained in a range of 0.00 to 0.01 mol/L with controlling the flow rates to carry out neutralization reaction. The solution started becoming clouded in the middle of the reaction and was increased in a viscosity in 47 minutes, and the solution was gelatinized. Addition was further continued, and the reaction was terminated in 90 minutes. After terminating the reaction, a temperature of the reaction liquid was maintained at 90°C for 30 minutes. A concentration of silica in the resulting solution was 55 g/L. Subsequently, sulfuric acid having the concentration described above was added until a pH of the solution was 3 to obtain a silica slurry. Then, wet process precipitated silica B was obtained by the same method as in Production Example A.

Production Example C

The same vessel as used in Production Example A was charged with 93 L of water and 0.6 L of the sodium silicate aqueous solution which were the same raw materials as used in Production Example A, and the mixture was heated up to 65°C. A concentration of $Na_2O$ in the resulting solution was 0.005 mol/L.

While maintaining the above solution at a temperature of 65°C, dropwise added at the same time were the same sodium silicate aqueous solution as described above at a flow rate of 540 ml/minute and sulfuric acid (18 mol/L) at a flow rate of 24 ml/minute. A $Na_2O$ concentration in the reaction solution was maintained in a range of 0.00 to 0.01 mol/L with controlling the flow rates to carry out neutralization reaction. The reaction solution started becoming clouded in the middle of the reaction and was increased in a viscosity in 50 minutes, and the solution was gelatinized. Addition was further continued, and the reaction was terminated in 90 minutes. After terminating the reaction, a temperature of the reaction liquid was maintained at 65°C for 60 minutes. A concentration of silica in the resulting solution was 55 g/L. Subsequently, sulfuric acid having the concentration described above was added until a pH of the solution was 3 to obtain a silica slurry. Then, wet process precipitated silica C was obtained by the same method as in Production Example A.

Production Example D

The same vessel as used in Production Example A was charged with 86 L of water and 0.5 L of the sodium silicate aqueous solution which were the same raw materials as used in Production Example A, and the mixture was heated up to 96°C. A concentration of $Na_2O$ in the resulting solution was 0.005 mol/L.

While maintaining the above solution at a temperature of 96°C, dropwise added at the same time were the same sodium silicate aqueous solution as described above at a flow rate of 615 ml/minute and sulfuric acid (18 mol/L) at a flow rate of 27 ml/minute. A $Na_2O$ concentration in the reaction solution was maintained in a range of 0.00 to 0.01 mol/L with controlling the flow rates to carry out neutralization reaction. The reaction solution started becoming clouded in the middle of the reaction and was increased in a viscosity in 40 minutes, and the solution was gelatinized. Addition was further continued, and the reaction was terminated in 90 minutes. After terminating the reaction, a temperature of the reaction liquid was maintained at 96°C for 30 minutes. A concentration of silica in the resulting solution was 62 g/L. Subsequently, sulfuric acid having the concentration described above was added until a pH of the solution was 3 to obtain a silica slurry. Then, wet process precipitated silica D was obtained by the same method as in Production Example A.

Examples 1 to 13 and Comparative Examples 1 to 5

The respective components for a tread formulation and a side formulation based on recipes shown in Tables 1 and 2 were kneaded by an ordinary method to prepare rubber compositions, wherein in the examples, used were aromatic vinyl compound-diene compound copolymers B-1 to B-10 having a low molecular weight and precipitated silicas A to D obtained in Production Examples A to D; and in the comparative examples, the aromatic vinyl compound-diene compound copolymers having a low molecular weight were not used or B-1 was used, and precipitated silica C or D or Nipsil AQ manufactured by Tosoh Silica Corporation or ULTRASIL VN2 manufactured by Degussa AG. was used as the silica.

Table 1

| Tread formulation | Parts by mass |
| --- | --- |
| SBR*1 | 96.25 |
| BR*2 | 30 |
| Low molecular polymer*3 | 15 |
| Carbon black*4 | 15 |
| Precipitated silica*5 | 65 |
| Organic silicon*6 | 5.2 |
| Stearic acid | 2 |
| Antioxidant 6C*7 | 1.5 |
| Zinc oxide | 3 |
| Vulcanization accelerator DPG*8 | 0.5 |
| Vulcanization accelerator NS*9 | 1 |

(continued)

| Tread formulation | Parts by mass |
|---|---|
| Sulfur | 1.5 |

Remarks:
1) SBR # 1500 (manufactured by JSR Corporation)
2) BR 150L (manufactured by Ube Industries, Ltd.)
3) Low molecular aromatic vinyl compound-diene compound copolymers B-1 to B-10
4) Seast KH (N339) (manufactured by Tokai Carbon Co., Ltd.)
5) Precipitated silicas prepared in Production Examples A to D or commercially available silicas
6) Silane coupling agent Si75 (bis(3-triethoxysilylpropyl) polysulfide in which the number of S in one molecule is 2.4 on average), manufactured by Degussa AG.)
7) N-(1,3-dimethylbutyl)-N'-phenyl-p-phenylenediamine
8) Diphenylguanidine
9) N-t-butyl-2--benzothiazylsulfeneamide

Table 2

| Side formulation | Parts by mass |
|---|---|
| Natural rubber*1 | 60 |
| BR*2 | 40 |
| Low molecular polymer*3 | 15 |
| Carbon black*4 | 30 |
| Precipitated silica*5 | 20 |
| Organic silicon*6 | 1.6 |
| Softening agent | 4 |
| Zinc oxide | 3 |
| Stearic acid | 2 |
| Antioxidant 224*7 | 1 |
| Vulcanization accelerator DM-P*8 | 0.2 |
| Vulcanization accelerator CZ-G*9 | 0.4 |
| Sulfur | 1.4 |

Remarks:
1) Natural rubber of a RSS #3 grade
2) BR 150L (manufactured by Ube Industries, Ltd.)
3) Low molecular aromatic vinyl compound-diene compound copolymers B-1 to B-10
4) Asahi #70 (manufactured by Asahi Carbon Co., Ltd.)
5) Precipitated silicas prepared in Production Examples A to D or commercially available silicas
6) Silane coupling agent Si75 (bis(3-triethoxysilylpropyl) polysulfide in which the number of S in one molecule is 2.4 on average), manufactured by Degussa AG.
7) 2,2,4-trimethyl-1,2-dihydroxyquinoline polymer
8) Dibenzothiazyl disulfide
9) N-cyclohexyl-2-benzothiazolylsulfeneamide

In the respective examples and comparative examples, the rubber compositions were vulcanized under the conditions of 160°C and 15 minutes to evaluate processability, low heat build-up and abrasion resistance or durability of the vulcanized rubbers. The results thereof are shown in Tables 3 and 4 together with the physical properties of the precipitated silicas used.

Table 3

|  | Comparative example | | | | | Example | | | |
|---|---|---|---|---|---|---|---|---|---|
|  | 1 | 2 | 3 | 4 | 5 | 1 | 2 | 3 | 4 |
| **Precipitated silica** | | | | | | | | | |
| Kind of precipitated silica | Nipsil AQ | ULTRASIL | C | D | Nipsil AQ | C | D | A | B |
| CTAB ($m^2$/g) | 147 | 105 | 210 | 80 | 147 | 210 | 80 | 112 | 134 |
| Particle size distribution diameter $A_{ac}$ (nm) | 35 | 74 | 125 | 213 | 35 | 125 | 213 | 208 | 178 |
| $-0.76 \times$ CTAB + 274 | 162 | 194 | 114 | 212 | 162 | 114 | 212 | 189 | 172 |
| Ignition loss - heating loss (% by mass) | 2.3 | 3.3 | 2.9 | 2.8 | 2.3 | 2.9 | 2.8 | 2.6 | 2.6 |
| **Low molecular polymer** | | | | | | | | | |
| Kind of low molecular polymer | | | | | B-1 | B-1 | B-1 | B-1 | B-1 |
| Styrene content (wt %) | | | | | 25 | 25 | 25 | 25 | 25 |
| Vinyl content (wt %) | | | | | 65 | 65 | 65 | 65 | 65 |
| Molecular weight (K) | | | | | 80 | 80 | 80 | 80 | 80 |
| **Tread formulation** | | | | | | | | | |
| Processability (index) | 100 | 102 | 102 | 101 | 80 | 81 | 80 | 86 | 84 |
| Low heat build-up (index) | 100 | 98 | 98 | 89 | 94 | 90 | 77 | 82 | 84 |
| Abrasion resistance (index) | 100 | 95 | 108 | 101 | 102 | 115 | 106 | 113 | 111 |
| **Side formulation** | | | | | | | | | |
| Processability (index) | 100 | 101 | 106 | 103 | 87 | 86 | 87 | 84 | 86 |
| Low heat build-up (index) | 100 | 97 | 95 | 91 | 95 | 91 | 78 | 81 | 88 |
| Durability (index) | 100 | 98 | 108 | 102 | 110 | 126 | 119 | 126 | 124 |

Table 4

|  | Example | | | | | | | | |
|---|---|---|---|---|---|---|---|---|---|
|  | 5 | 6 | 7 | 8 | 9 | 10 | 11 | 12 | 14 |
| **Precipitated silica** | | | | | | | | | |
| Kind of precipitated silica | D | D | D | D | D | D | D | D | D |
| CTAB ($m^2$/g) | 80 | 80 | 80 | 80 | 80 | 80 | 80 | 80 | 80 |
| Particle size distribution diameter $A_{ac}$ (nm) | 213 | 213 | 213 | 213 | 213 | 213 | 213 | 213 | 213 |
| $-0.76 \times$ CTAB + 274 | 212 | 212 | 212 | 212 | 212 | 212 | 212 | 212 | 212 |
| Ignition loss - heating loss (% by mass) | 2.8 | 2.8 | 2.8 | 2.8 | 2.8 | 2.8 | 2.8 | 2.8 | 2.8 |
| **Low molecular polymer** | | | | | | | | | |
| Kind of low molecular polymer | B-2 | B-3 | B-4 | B-5 | B-6 | B-7 | B-8 | B-9 | B-10 |
| Styrene content (wt %) | 25 | 25 | 25 | 25 | 25 | 25 | 25 | 25 | 25 |
| Vinyl content (wt %) | 65 | 65 | 65 | 65 | 65 | 65 | 65 | 65 | 65 |
| Molecular weight (K) | 4 | 9 | 12 | 25 | 40 | 60 | 120 | 180 | 220 |
| **Tread formulation** | | | | | | | | | |
| Processability (index) | 73 | 73 | 73 | 75 | 77 | 81 | 83 | 87 | 89 |
| Low heat build-up (index) | 80 | 80 | 80 | 79 | 78 | 78 | 75 | 76 | 78 |

(continued)

| Tread formulation | | | | | | | | | |
|---|---|---|---|---|---|---|---|---|---|
| Abrasion resistance (index) | 101 | 102 | 106 | 105 | 104 | 107 | 109 | 112 | 116 |
| Side formulation | | | | | | | | | |
| Processability (index) | 81 | 81 | 82 | 82 | 85 | 84 | 87 | 89 | 92 |
| Low heat build-up (index) | 83 | 80 | 81 | 77 | 75 | 77 | 76 | 79 | 81 |
| Durability (index) | 121 | 122 | 120 | 122 | 120 | 121 | 118 | 124 | 127 |

It can be found from the results shown in Tables 3 and 4 that the rubber compositions prepared by using any of low molecular aromatic vinyl compound-diene compound copolymers B-1 to B-10 in combination with any of precipitated silicas A to D are rubber compositions which are improved in low heat build-up keeping a good balance with abrasion resistance or durability and which are excellent as well in processability.

It can be found from the results shown in Tables 3 and 4 that the acoustic particle size distribution diameters $A_{ac}$ of precipitated silicas A to D used in the examples are larger than the values determined from the equation of $-0.76 \times CTAB + 274$ and that in contrast with the above, commercially available silicas used in the comparative examples have small $A_{ac}$. Further, it can be found from the results shown in Tables 3 and 4 that a difference between an ignition loss and a heating loss in precipitated silicas A to D satisfies as well Formula (II) described above.

**Claims**

1. A pneumatic tire prepared by using a rubber composition prepared by compounding precipitated silica with a rubber component comprising 100 parts by mass of a rubber component (A) comprising at least one of a natural rubber and a synthetic diene base rubber and 5 to 60 parts by mass of an aromatic vinyl compound-diene compound copolymer (B) having a weight average molecular weight (measured by gel permeation chromatography in terms of polystyrene) of 4,000 to 250,000 which comprises 0 to 80 % by mass of the aromatic vinyl compound and in which a vinyl bond content in the parts of the diene compound is 0 to 80 % by mass, **characterised in that** a cetyltrimethylammonium bromide-adsorbing specific surface area (CTAB) (m$^2$/g) of the precipitated silica and the mode $A_{ac}$ (nm) in diameters of primary aggregates thereof, which is 1 $\mu$m or less and is determined by acoustic measurement of particle size distribution, satisfy equation (I) and an ignition loss (mass reduction % when heated at 750°C for 3 hours) of the precipitated silica and a heating loss (mass reduction % when heated at 105°C for 2 hours) thereof satisfy equation (II) shown below, and wherein the precipitated silica is produced by a precipitation process and has CTAB of 50 to 250 m$^2$/g measured according to ASTM D3765-92 and is compounded in an amount of 10 to 150 parts by mass based on 100 parts by mass of rubber component (A)

$$A_{ac} \geq -0.76 \text{ x } (CTAB) + 274 \text{ (I)}$$

$$\text{ignition loss } - \text{ heating loss } \leq 3 \text{ (II)}.$$

2. The pneumatic tire as described in claim 1 5, wherein a silane coupling agent is compounded in a proportion of 1 to 20 % by mass based on a compounding amount of the precipitated silica.

3. The pneumatic tire as described in claim 2, wherein the silane coupling agent is at least one selected from the group consisting of:

a compound represented by Formula (III) shown below:

$$A_mB_{3-m}Si-(CH_2)_a-S_b-(CH_2)_a-SiA_mB_{3-m} \qquad (III)$$

(wherein A is $C_nH_{2n+1}O$ (n is an integer of 1 to 3) or a chlorine atom; B is an alkyl group having 1 to 3 carbon atoms; m is an integer of 1 to 3; a is an integer of 1 to 9; b is an integer of 1 or more and may have distribution; provided that when m is 1, two B may be same or different and that when m is 2 or 3, two or three A may be same or different),
a compound represented by Formula (IV) shown below:

$$A_mB_{3-m}Si-(CH_2)_c-Y \qquad (IV)$$

(wherein A is $C_nH_{2n+1}O$ (n is an integer of 1 to 3) or a chlorine atom; B is an alkyl group having 1 to 3 carbon atoms; Y is a mercapto group, a vinyl group, an amino group, a glycidoxy group or an epoxy group; m is an integer of 1 to 3; c is an integer of 0 to 9; provided that when m is 1, two B may be same or different and that when m is 2 or 3, two or three A may be same or different) and
a compound represented by Formula (V) shown below:

$$A_mB_{3-m}Si-(CH_2)_a-S_b-Z \qquad (V)$$

(wherein A is $C_nH_{2n+1}O$ (n is an integer of 1 to 3) or a chlorine atom; B is an alkyl group having 1 to 3 carbon atoms; Z is a benzothiazolyl group, an N,N-dimethylthiocarbamoyl group or a methacryloyl group; m is an integer of 1 to 3; a is an integer of 1 to 9; b is an integer of 1 or more and may have distribution; provided that when m is 1, two B may be same or different and that when m is 2 or 3, two or three A may be same or different).

4. The pneumatic tire as described in any one of claims 1 to 3, wherein carbon black is added as a reinforcing filler in an amount of 80 parts by mass or less based on 100 parts by mass of rubber component (A), and a total compounding amount of the carbon black and the precipitated silica is 120 parts by mass or less.

5. The pneumatic tire as described in any one of claims 1 to 4, wherein a weight average molecular weight (measured by gel permeation chromatography in terms of polystyrene) of aromatic vinyl compound-diene compound copolymer (B) is 10,000 to 200,000.

6. The pneumatic tire as described in claim 5, wherein a weight average molecular weight (measured by gel permeation chromatography in terms of polystyrene) of aromatic vinyl compound-diene compound copolymer (B) is 30,000 to 150,000.

7. The pneumatic tire as described in claim 6, wherein a weight average molecular weight (measured by gel permeation chromatography in terms of polystyrene) of aromatic vinyl compound-diene compound copolymer (B) is 50,000 to 150,000.

8. The pneumatic tire as described in any one of claims 1 to 7, wherein aromatic vinyl compound-diene compound copolymer (B) comprises 0 to 60 % by mass of the aromatic vinyl compound and has a vinyl bond content of 0 to 80 % by mass in the parts of the diene compound.

9. The pneumatic tire as described in claim 8, wherein aromatic vinyl compound-diene compound copolymer (B) comprises 0 to 50 % by mass of the aromatic vinyl compound and has a vinyl bond of 0 to 70 % by mass in the parts of the diene compound.

10. The pneumatic tire as described in any one of claims 1 to 9, wherein the aromatic vinyl compound of aromatic vinyl compound-diene compound copolymer (B) is styrene.

11. The pneumatic tire as described in any one of claims 1 to 10, wherein the diene compound of aromatic vinyl compound-diene compound copolymer (B) is butadiene.

**Patentansprüche**

1. Luftreifen, der durch Verwendung einer Kautschukzusammensetzung hergestellt wird, die durch Compoundieren von ausgefälltem Siliciumdioxid mit einer Kautschukkomponente hergestellt wird, die 100 Massenteile einer Kautschukkomponente (A), die mindestens eines von einem Naturkautschuk und einem synthetischen Kautschuk auf Dienbasis und 5 bis 60 Massenteile eines Copolymers von aromatischer Vinylverbindung-Dienverbindung (B) umfasst, das ein gewichtsdurchschnittliches Molekulargewicht (durch Gelpermeationschromatographie gemessen, als Polystyrol ausgedrückt) von 4 000 bis 250 000 aufweist und das 0 bis 80 Masse-% der aromatischen Vinylverbindung umfasst und wobei ein Vinylbindungsgehalt in den Teilen der Dienverbindung 0 bis 80 Masse-% beträgt, **dadurch gekennzeichnet, dass** ein Cetyltrimethylammoniumbromid absorbierender spezifischer Oberflächenbereich (CTAB) ($m^2$/g) des ausgefällten Siliciumdioxids und der Modus $A_{ac}$ (nm) in Durchmessern primärer Aggregate davon, der 1 $\mu$m oder weniger beträgt und durch akustisches Messen der Teilchengrößenverteilung bestimmt wird, der Gleichung (I) entsprechen und ein Glühverlust (Massenreduktions-% beim 3 Stunden langen Erhitzen bei 750 °C) des ausgefällten Siliciumdioxids und ein Erhitzungsverlust (Massenreduktions-% beim 2 Stunden langen Erhitzen bei 105 °C) davon der Gleichung (II), die unten gezeigt ist, entsprechen und wobei das ausgefällte Siliciumdioxid durch einen Ausfällungsvorgang hergestellt wird und einen CTAB-Wert von 50 bis 250 $m^2$/g, gemäß ASTM D3765-92 gemessen, aufweist und in einer Menge von 10 bis 150 Massenteilen, auf 100 Massenteile Kautschukkomponente (A) bezogen, compoundiert wird:

$$A_{ac} \geq -0,76 \text{ x } (CTAB) + 274 \text{ (I)}$$

$$\text{Glühverlust} - \text{Erhitzungsverlust} \leq 3 \text{ (II)}.$$

2. Luftreifen wie in Anspruch 1 beschrieben, wobei ein Silankopplungsmittel in einem Verhältnis von 1 zu 20 Masse-%, auf eine Compoundiermenge des ausgefällten Siliciumdioxids bezogen, compoundiert wird.

3. Luftreifen wie in Anspruch 2 beschrieben, wobei das Silankopplungsmittel mindestens eines ist ausgewählt aus der Gruppe bestehend aus:

einer Verbindung, die durch die Formel (III), die unten gezeigt ist, dargestellt ist:

$$A_mB_{3-m}Si\text{-}(CH_2)_a\text{-}S_b\text{-}(CH_2)_a\text{-}SiA_mB_{3-m} \text{ (III)}$$

(wobei A $C_nH_{2n+1}O$ (wobei n eine ganze Zahl von 1 bis 3 ist) oder ein Chloratom ist; B eine Alkylgruppe ist, die 1 bis 3 Kohlenstoffatome aufweist; m eine ganze Zahl von 1 bis 3 ist; a eine ganze Zahl von 1 bis 9 ist; b eine ganze Zahl von 1 oder mehr ist und eine Verteilung aufweisen kann; vorausgesetzt, dass, wenn m 1 beträgt, zwei B gleich oder verschieden sein können und dass, wenn m 2 oder 3 beträgt, zwei oder drei A gleich oder verschieden sein können),
einer Verbindung, die durch die Formel (IV), die unten gezeigt ist, dargestellt ist:

$$A_mB_{3-m}Si\text{-}(CH_2)_c\text{-}Y \text{ (IV)}$$

(wobei A $C_nH_{2n+1}O$ (wobei n eine ganze Zahl von 1 bis 3 ist) oder ein Chloratom ist; B eine Alkylgruppe ist, die 1 bis 3 Kohlenstoffatome aufweist; Y eine Mercaptogruppe, eine Vinylgruppe, eine Aminogruppe, eine Glycidoxygruppe oder eine Epoxygruppe ist; m eine ganze Zahl von 1 bis 3 ist; c eine ganze Zahl von 0 bis 9 ist; vorausgesetzt, dass, wenn m 1 beträgt, zwei B gleich oder verschieden sein können und dass, wenn m 2 oder 3 beträgt, zwei oder drei A gleich oder verschieden sein können) und
einer Verbindung, die durch die Formel (V), die unten gezeigt ist, dargestellt ist:

$$A_mB_{3-m}Si\text{-}(CH_2)_a\text{-}S_b\text{-}Z \text{ (V)}$$

(wobei A $C_nH_{2n+1}O$ (wobei n eine ganze Zahl von 1 bis 3 ist) oder ein Chloratom ist; B eine Alkylgruppe ist, die 1 bis 3 Kohlenstoffatome aufweist; Z eine Benzothiazolylgruppe, eine N,N-Dimethylthiocarbamoylgruppe oder eine Methacryloylgruppe ist; m eine ganze Zahl von 1 bis 3 ist; a eine ganze Zahl von 1 bis 9 ist; b eine ganze Zahl von 1 oder mehr ist und eine Verteilung aufweisen kann; vorausgesetzt, dass, wenn m 1 beträgt, zwei B gleich oder verschieden sein können und dass, wenn m 2 oder 3 beträgt, zwei oder drei A gleich oder verschieden sein können).

**4.** Luftreifen wie in einem der Ansprüche 1 bis 3 beschrieben, wobei Ruß als verstärkender Füllstoff in einer Menge von 80 Massenteilen oder weniger, auf 100 Massenteile Kautschukkomponente (A) bezogen, zugegeben wird und eine gesamte Compoundiermenge des Rußes und des ausgefällten Siliciumdioxids 120 Massenteile oder weniger beträgt.

**5.** Luftreifen wie in einem der Ansprüche 1 bis 4 beschrieben, wobei ein gewichtsdurchschnittliches Molekulargewicht (durch Gelpermeationschromatographie gemessen, als Polystyrol ausgedrückt) von Copolymer von aromatischer Vinylverbindung-Dienverbindung (B) 10 000 bis 200 000 beträgt.

**6.** Luftreifen wie in Anspruch 5 beschrieben, wobei ein gewichtsdurchschnittliches Molekulargewicht (durch Gelpermeationschromatographie gemessen, als Polystyrol ausgedrückt) von Copolymer von aromatischerer Vinylverbindung-Dienverbindung (B) 30 000 bis 150 000 beträgt.

**7.** Luftreifen wie in Anspruch 6 beschrieben, wobei ein gewichtsdurchschnittliches Molekulargewicht (durch Gelpermeationschromatographie gemessen, als Polystyrol ausgedrückt) von Copolymer von aromatischer Vinylverbindung-Dienverbindung (B) 50 000 bis 150 000 beträgt.

**8.** Luftreifen wie in einem der Ansprüche 1 bis 7 beschrieben, wobei ein Copolymer von aromatischer Vinylverbindung-Dienverbindung (B) 0 bis 60 Masse-% der aromatischen Vinylverbindung umfasst und einen Vinylbindungsgehalt von 0 bis 80 Masse-% in den Teilen der Dienverbindung aufweist.

**9.** Luftreifen wie in Anspruch 8 beschrieben, wobei das Copolymer von aromatischer Vinylverbindung-Dienverbindung (B) 0 bis 50 Masse-% der aromatischen Vinylverbindung umfasst und einen Vinylbindungsgehalt von 0 bis 70 Masse-% in den Teilen der Dienverbindung aufweist.

**10.** Luftreifen wie in einem der Ansprüche 1 bis 9 beschrieben, wobei die aromatische Vinylverbindung des Copolymers von aromatischer Vinylverbindung-Dienverbindung (B) Styrol ist.

**11.** Luftreifen wie in einem der Ansprüche 1 bis 10 beschrieben, wobei die Dienverbindung des Copolymers von aromatischer Vinylverbindung-Dienverbindung (B) Butadien ist.

## Revendications

**1.** Bandage pneumatique préparé en utilisant une composition de caoutchouc préparée par malaxage de silice précipitée avec un composant de caoutchouc comprenant 100 parties en masse d'un composant de caoutchouc (A) comprenant au moins l'un parmi un caoutchouc naturel et un caoutchouc synthétique à base de diène et 5 à 60 parties en masse d'un copolymère de composé vinylique aromatique-composé diène (B) ayant un poids moléculaire moyen en poids (mesuré par chromatographie par perméation sur gel en termes de polystyrène) de 4 000 à 250 000 qui comprend 0 à 80 % en masse du composé vinylique aromatique et dans lequel une teneur en liaisons vinyliques dans les parties de composé diène est de 0 à 80 % en masse, **caractérisée en ce qu'**une surface spécifique déterminée à partir de la méthode d'adsorption de bromure de cétyltriméthylammonium (CTAB) (m²/g) de la silice précipitée et le mode $A_{ac}$ (nm) dans les diamètres de ses agrégats primaires, qui est de 1 $\mu$m ou moins et qui est déterminé par mesure acoustique de la distribution de taille des particules, satisfont l'équation (I) et qu'une perte au feu (% de réduction de masse lorsque chauffée à 750°C durant 3 heures) de la silice précipitée et qu'une perte au chauffage (% de réduction de masse lorsque chauffée à 105°C durant 2 heures) de celle-ci satisfont l'équation (II) présentée ci-dessous, et où la silice précipitée est produite grâce à un procédé de précipitation et a une valeur CTAB de 50 à 250 m²/g mesurée selon la norme ASTM D3765-92 et est malaxée en une quantité de 10 à 150 parties en masse sur la base de 100 parties en masse du composant de caoutchouc (A):

$$A_{ac} \geq -0,76 \text{ x (CTAB)} + 274 \quad \text{(I)}$$

$$\text{perte au feu - perte au chauffage} \leq 3 \text{ (II)}.$$

**2.** Bandage pneumatique tel que décrit selon la revendication 1, dans lequel un agent de couplage de type silane est malaxé en une proportion de 1 à 20 % en masse sur la base d'une quantité de malaxage de la silice précipitée.

3. Bandage pneumatique tel que décrit selon la revendication 2, dans lequel l'agent de couplage de type silane est au moins l'un sélectionné parmi le groupe constitué de:

un composé représenté par la formule (III) présentée ci-dessous:

$$A_mB_{3-m}Si\text{-}(CH_2)_a\text{-}S_b\text{-}(CH_2)_a\text{-}SiA_mB_{3-m}\ (III)$$

(dans laquelle A est $C_nH_{2n+1}O$ (n est un nombre entier d'une valeur de 1 à 3) ou un atome de chlore; B est un groupe alkyle ayant 1 à 3 atome(s) de carbone; m est un nombre entier d'une valeur de 1 à 3; a est un nombre entier d'une valeur de 1 à 9; b est un nombre entier d'une valeur de 1 ou plus et peut présenter une distribution; à condition que lorsque m a la valeur de 1, deux B puissent être identiques ou différents et que lorsque m a la valeur de 2 ou 3, deux ou trois A puissent être identiques ou différents),
un composé représenté par la formule (IV) présentée ci-dessous:

$$A_mB_{3-m}Si\text{-}(CH_2)_c\text{-}Y\ (IV)$$

(dans laquelle A est $C_nH_{2n+1}O$ (n est un nombre entier d'une valeur de 1 à 3) ou un atome de chlore; B est un groupe alkyle ayant 1 à 3 atome(s) de carbone; Y est un groupe mercapto, un groupe vinyle, un groupe amino, un groupe glycidoxy ou un groupe époxy; m est un nombre entier d'une valeur de 1 à 3; c est un nombre entier d'une valeur de 0 à 9; à condition que lorsque m a la valeur de 1, deux B puissent être identiques ou différents et que lorsque m a la valeur de 2 ou 3, deux ou trois A puissent être identiques ou différents) et
d'un composé représenté par la formule (V) présentée ci-dessous:

$$A_mB_{3-m}Si\text{-}(CH_2)_a\text{-}S_b\text{-}Z\ (V)$$

(dans laquelle A est $C_nH_{2n+1}O$ (n est un nombre entier d'une valeur de 1 à 3) ou un atome de chlore; B est un groupe alkyle ayant 1 à 3 atome(s) de carbone; Z est un groupe benzothiazolyle, un groupe N,N-diméthylthiocarbamoyle ou un groupe méthacryloyle; m est un nombre entier d'une valeur de 1 à 3; a est un nombre entier d'une valeur de 1 à 9; b est un nombre entier d'une valeur de 1 ou plus et peut présenter une distribution; à condition que lorsque m a la valeur de 1, deux B puissent être identiques ou différents et que lorsque m a la valeur de 2 ou 3, deux ou trois A puissent être identiques ou différents).

4. Bandage pneumatique tel que décrit selon l'une quelconque des revendications 1 à 3, dans lequel du noir de carbone est ajouté comme charge de renfort en une quantité de 80 parties en masse ou moins sur la base de 100 parties en masse du composant de caoutchouc (A), et une quantité totale de malaxage du noir de carbone et de la silice précipitée est de 120 parties en masse ou moins.

5. Bandage pneumatique tel que décrit selon l'une quelconque des revendications 1 à 4, dans lequel un poids moléculaire moyen en poids (mesuré par chromatographie par perméation sur gel en termes de polystyrène) de copolymère de composé vinylique aromatique-composé diène (B) est de 10 000 à 200 000.

6. Bandage pneumatique tel que décrit selon la revendication 5, dans lequel un poids moléculaire moyen en poids (mesuré par chromatographie par perméation sur gel en termes de polystyrène) de copolymère de composé vinylique aromatique-composé diène (B) est de 30 000 à 150 000.

7. Bandage pneumatique tel que décrit selon la revendication 6, dans lequel un poids moléculaire moyen en poids (mesuré par chromatographie par perméation sur gel en termes de polystyrène) de copolymère de composé vinylique aromatique-composé diène (B) est de 50 000 à 150 000.

8. Bandage pneumatique tel que décrit selon l'une quelconque des revendications 1 à 7, dans lequel le copolymère de composé vinylique aromatique-composé diène (B) comprend 0 à 60 % en masse du composé vinylique aromatique et a une teneur en liaisons vinyliques de 0 à 80 % en masse dans les parties de composé diène.

**9.** Bandage pneumatique tel que décrit selon la revendication 8, dans lequel le copolymère de composé vinylique aromatique-composé diène (B) comprend 0 à 50 % en masse du composé vinylique aromatique et a une teneur en liaisons vinyliques de 0 à 70 % en masse dans les parties de composé diène.

**10.** Bandage pneumatique tel que décrit selon l'une quelconque des revendications 1 à 9, dans lequel le composé vinylique aromatique du copolymère de composé vinylique aromatique-composé diène (B) est le styrène.

**11.** Bandage pneumatique tel que décrit selon l'une quelconque des revendications 1 à 10, dans lequel le composé diène du copolymère de composé vinylique aromatique-composé diène (B) est le butadiène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 248116 A
- JP 70369 A
- JP 245838 A
- JP 252431 A
- JP 157825 A
- JP 2006037046 A
- JP 57767 A
- JP 197541 A
- JP 2005298804 A
- JP 2005500420 B
- JP 2008127524 B
- WO 2005087858 A
- JP 2008143943 B
- JP 2007138069 B